# EUROPÄISCHE PATENTSCHRIFT

(11) **EP 1 270 848 B1**
(45) Veröffentlichungstag und Bekanntmachung des Hinweises auf die Patenterteilung: **13.09.2006**
(21) Anmeldenummer: 02090221.9
(22) Anmeldetag: 24.06.2002
(51) Int. Cl.: E04H 12/20, F03D 11/04

(54) **Nachgiebige Seilabspannung für Wasserbauwerke**
Elastic rope anchoring for off-shore buildings
Affaiblissement souple avec des câbles pour bâtiments maritimes

(43) Veröffentlichungstag der Anmeldung: 02.01.2003
(73) Patentinhaber: Falkenhagen, Joachim, 12555 Berlin (DE)
(72) Erfinder: Falkenhagen, Joachim, 12555 Berlin (DE)

(56) Entgegenhaltungen:
- WO-A-01/36766
- DE-C- 316 956

## Beschreibung

### II. Einsatzgebiet

Die Erfindung beschreibt eine verseilte Tragkonstruktion, die besonders für Türme mit relativ großer Momentbelastung und Schwingungsneigung geeignet ist, wenn diese Türme im Wasser stehen und seitliche Bewegungen aufweisen, wie es bei Offshore-Windkraftanlagen und deren Türmen der Fall ist.

### III. Stand der Technik:

Für schlanke Tragkonstruktionen, die in Relation zu ihrem Gewicht vergleichsweise hohe Momentenbelastungen an den Baugrund zu übertragen haben, wie sie insbesondere Funktürme, Windkraftanlagen und Offshore-Bauwerke darstellen, werden in der Regel Rohrtürme oder Fachwerktürme verwendet. Wird der zentrale Turm mit Halteseilen im Lot gehalten, erfolgt regelmäßig eine direkte Seilführung von dem Fundament des Seils zu dem Befestigungspunkt am Turm.

Für die Gründung des zentralen Turms kommen insbesondere Schwerkraftfundamente, Pfahlgründungen mit mehreren Pfählen oder Einzelpfähle (Monopfahl bzw. monopile) in Frage.

Die Tragstrukturen bisher errichteter bzw. vor der Errichtung stehender offshore-Windkraftanlagen (u.a Tuno Knob, Blyth harbour, Middelgrunden) und weitere Machbarkeitsstudien beruhen auf derartigen Lösungen ohne Spannseile.

Beispiele sind u.a. von der KFA Jülich, der Universität Delft und dem deutschen Windenergie-Institut (DEWi) veröffentlicht worden (KFA Jülich, Projektträger BEO, Siemens AG, Vulkan Engineering, Preußen-Elektra et. al.: Offshore-Windenergiesysteme, Abschlußbericht zum Fördervorhaben des BMBF Nr. 0329645, Nov. 1995, S. 117 ff.; Delft University of Technology, Faculty of civil engineeringand geoscience, Institute for Wind Energy, OPTI-OWEC final report, volume 2, methods assisting the Design of Offshore Wind Energy Conversion Systems, Seite 5-1 und volume 4, A Typical Design Solution for an Offshore Wind Energy Conversion System, Seite 3-13 ff. und 6-8 ff., Delft1998 (OPTI-OWEC); Greenpeace (Hrsg., Verfaßt durch das Deutsche Wind Energie Institut - DEWI): North Sea Offshore Wind - A Powerhouse for Europe, Abschnitt 3.4 support structures, Seite 36 ff.

Zur seitlichen Abstützung der Tragstruktur werden teilweise Tripoden oder Fachwerkkonstruktionen vorgesehen, wobei Fachwerktürme meist weit ausladende Fußpunkte und keine Verspannung aufweisen.

Eine Seilkonstruktion für Offshore-Windkraftanlagen beschreiben Bunce und Carey (A guyed support structure design for large Megawatt offshore wind turbines in deep waters, in: Poceedings EWEA Special Topic Conference in Wind Energy, Brussels 2001), allerdings mit Rohrturm und Schwerkraftfundament. In den dort angegebenen Zeichnungen sind die Halteseile untereinander durch "fender lines" verbunden. Eine von diesen ausgeübte Abweichung der Halteseile aus der geradlinigen Führung ist aber, abweichend von den aus der Schwerkraft resultierenden physikalischen Zwangsläufigkeiten, in diesem Artikel nicht dargestellt. Die Verfasser haben zudem in Betracht gezogen, diese Konstruktion am Fußpunkt gelenkig auszuführen, d.h. ohne Momentübertragung an das Fundament (mündliche Mitteilung). Die Begrenzung der Anfangssteifheit der Seile ist damit nicht beabsichtigt oder ersichtlich; sie würde vielmehr die Standfähigkeit einer Konstruktion mit gelenkigem Fußpunkt beeinträchtigen.

Ein weiteres Beispiel wird im Dokument WO 0136766 offenbart. Hier die im Bereich des Turms seitlich angreifenden und schräg nach unten verlaufenden Halteseilen geradlinig zum Boden geführt werden, während weitere Seile zum Fixieren eines Spreizrahmens am Turm vorgesehen sind.

Bekannt und z.B. zur Federung von Pedersen-Fahrrädern genutzt ist die Tatsache, daß sich bei einem mit leichtem Knick gespannten Seil geringe Längenänderungen dieses Seils in große Bewegungen in Querrichtung übertragen.

Als Klettergerüste auf Spielplätzen werden netzartig miteinander verbundene Seile an einem zentralen Pfahl aufgehängt, ohne daß die geringere Anfangsstabilität des Pfahls durch die untereinander verbundenen Seilen als Entwurfsziel anzusehen wäre.

### IV. Probleme der bekannten Lösungen:

Tragkonstruktionen mit zentralem Turm ohne Spannseile führen zu großem Momenteneintrag im Erdboden mit ungünstigem Hebelarm, etwa bei Lösungen mit Rohrturm und Monopile.

Da der Befestigungspunkt von Halteseilen bei Windkraftanlagen wegen dem freizuhaltenden Bewegungsraum für die Rotoren deutlich unterhalb des Kraftangriffspunktes liegt, muß das Fundament meist eine Horizontalkraft in Richtung der Windkraft an den Turm übertragen, damit dieser gegenüber Bewegungen um den Angriffspunkt des Halteseils im Gleichgewicht bleibt.

Verspannte Türme führen zu einer vergleichsweise steifen Wirkung der Seile, in Abhängigkeit von der Elastizität der Seilmaterials und dem Durchhang, ausgedrückt durch eine geringe seitliche Verschiebung des Seilangriffspunkts im Verhältnis zur eingeleiteten Kraft, im Vergleich zu der seitlichen Durchbiegung eines schlanken Turms. Ein größerer Durchhang kann aus verschiedenen Gründen unerwünscht sein. Bei Türmen mit mehrseitig einzeln gespannten Seilen kann insbesondere ein in Kraftrichtung befindliches Seil erschlaffen und bei anschließender Rückbewegung einen starken Ruck verursachen; wird dem durch eine vergrößerte Vorspannung entgegengewirkt, entstehen zusätzlich abzutragende Kräfte.

Durch Biegung des Turmes in einer Biegungsrichtung um einen vergleichsweise wenig seitlich ausgelenkten Seilangriffspunkt am Turm kann es dann dazu kommen, daß der untere Turmteil und das Fundament gegenüber der Vertikalen in entgegengesetzter Richtung geneigt ist wie der obere Teil des Turms, wobei sich die senkrechte Stelle des Turmes zwischen Seilangriffspunkt und Boden befindet. Durch eine derartige Schrägstellung übt das Fundament evtl. ein unerwünschtes Kippmoment auf den Turm in der gleichen Richtung wie der Rotor aus. Außerdem ist bei derartiger Schrägstellung des unteren Turmteils mit vergleichsweise großen seitlichen Verschiebungen des Pfahls in Nähe des Meeresbodens zu rechnen, größer als in tieferen Bodenschichten. Die Bodeneigenschaften im Pfahlbereich werden daher schlecht ausgenutzt.

Eine entsprechend steife Wirkung der Halteseile würde sich auch ergeben, wenn man nahezu schlaffe Verbindungen zwischen den Halteseilen anordnet, die ähnlich der von Bunce&Carey beschriebenen Ifender lines" den nahezu geradlinigen Verlauf der Halteseile nicht beeinträchtigten. In diesem Fall würden jedoch äußere Kräfte auf die Ifender lines" sich wegen der Winkelverhältnisse in deutlich verstärktem Maße auf die Halteseile übertragen, und dort zu erhöten Zugspannungen führen.

### V. Neue Lösung

Die Tragkonstruktion weist im Boden einen auf Drehmoment um eine horizontale Achse belastbaren Gründungskörper (z.B. als Großpfahl, im folgenden: Monopfahl) auf, über die eingeleitete horizontale Kräfte auf das umgebende Erdreich abgegeben werden können.

Dieses Fundament, bzw. der Pfahl ist nach oben mit einem Turm verbunden bzw. fortgesetzt. Dieser Turm kann gemäß dem Stand der Technik ein Rohrturm sein, im Bereich der Wassersäule auch ein nicht eingerammter oberer Teil des Monopfahls, gemäß einem Vorschlag des Anmelders aber auch ein schlanker Fachwerkturm. Dieser Turm wird mit "Halteseilen" seitlich verspannt.

Die Halteseile werden untereinander mit weiteren, weniger stark gespannten Seilen (Verbindungsseilen) verbunden, wobei die Verbindungsseile in der einfachsten Ausführung horizontal bzw. schwach geneigt verlaufen, und im Falle dreier Halteseile vorzugsweise ein gleichseitiges Dreieck bilden.

Durch die Verbindung zwischen den Halteseilen wird erreicht, daß eine Biegung des Turmes in eine Richtung zu einer Entspannung des Halteseils in Bewegungsrichtung führt.

Daraufhin bewegen sich die Verbindungsseile (ungefähr) entgegengesetzt zu der Turmbewegung, verbunden mit einer verstärkten Knickung des Halteseils. Auf der gegenüberliegenden Seite ermöglicht dieses Nachgeben des Verbindungsseils eine Verschiebung des dortigen Halteseils in Richtung größerer Geradlinigkeit, ohne daß es hierfür ursächlich einer Streckung des Verbindungsseils bedarf.

Aus Korrosionsschutzgründen bietet sich die Verwendung von Stäben statt Seilen an, die jedoch ohne Knickfestigkeitsnachweis auf Zug belastet werden können, und damit dem statischen Verhalten von Seilen ähneln.

### Vorteile

In vertikaler Ausgangsstellung kann die von den Seilen erzeugte (marginale) Federkonstante (nahezu) gegen Null gehen, weil bei (nahezu) gleichem Knickwinkel der Halteseile die (marginale) Zunahme der Knickung auf der Seite in Kraftrichtung eine Ausgleichsbewegung der Verbindungsseile verursacht, die eine Abnahme der Knickung des bzw. der entgegengesetzten Halteseile(e) im gleichem Maße ermöglicht, ohne daß sich dabei die Zugspannungen in den Halteseilen ändern bzw. unterschiedlich stark vergrößern.

Durch diese Führung der Spannseile kommt es also zu einer Nachgiebigkeit der Seilverspannung bei mäßig starken seitlichen Bewegungen des Turmes, weil diese anfangs per saldo geringe aufrichtende Kräfte in den Seilen verursachen.

Dadurch wird erreicht, daß der Turm, bevor die Halteseile ein stärkeres Saldo der seitlichen Seilkräfte verursachen, eine größere Schrägstellung erreicht, als wenn geradlinig geführte Seile sofort mit der Straffheit ihrer Federkonstante bzw. mit den aus der Seildurchhängung resultierenden Kräften am Turm angreifen würden.

Mit zunehmender seitlicher Auslenkung des Turms weisen die einander entgegengesetzten Halteseile einen immer unterschiedlicheren Knickwinkel auf. Dies führt bei gleicher Zugkraft an den entgegengesetzten Enden der Verbindungsseile dazu, daß eine unterschiedliche Seilspannung in den Halteseilen ensteht, so daß ein Kräftesaldo entsteht, der einer weiteren seitlichen Verschiebung des Haltepunkts am Turm immer stärker entgegenwirkt.

Bei vollständiger Streckung des der Bewegungsrichtung abgewanden Halteseils geht das Verhältnis der Kräfte im Halteseil gegenüber dem Verbindungsseil gegen Unendlich. Dieser Zustand würde nur bei Erschlaffung der anderen Seile (nahezu) erreicht werden, so daß dann nur noch dieses Halteseil die Federkonstante des Seilsystems bestimmen würde.

Durch die geringe Anfangssteifheit des Seilsystems kommt es erst nach einer gewissen Verschiebung des Turms in Höhe des Seilangriffspunkts zum Aufbau von stärkeren, stabilisierend wirkenden Kräften im Seil. Allmählich zunehmende, auf den Turm einwirkende Kräfte werden daher anfangs hauptsächlich in das Fundament übertragen, und erst anschließend (auch) auf das Seil. Der Turm kann damit größere Kraft- und Momentanteile in die Gründung übertragen, und die stärkere Bewegung kann zur Dämpfung beitragen.

Durch die Geometrie der Seilführung kann eine Anpassung der effektiven Federkonstante der Seilstruktur an die Steifheit von Turm und Gründung erreicht werden, auch wenn durch die maximale Lastaufnahme ein bestimmter Querschnitt des Seils vorgegeben ist.

Das Fundament des Turms, das bei offshore-Windkraftanlagen zur Übertragung von (Dreh-) Momenten um eine vertikale Achse ohnehin eine beträchliche Größe besitzen muß, wird somit an der Einleitung von Kippmomenten beteiligt. Insbesondere ist eine Biegung und Schrägstellung des gesamten Turms in Richtung der (z.B. durch Windkräfte im Rotor) eingeleiteten Kraft möglich. Die entsprechende Schrägstellung im Bereich des Fundaments bewirkt eine günstige Krafteinleitung vorrangig in tieferen, belastbareren Bodenschichten und ein günstiges Momentengleichgewicht.

Bei unterhalb des Befestigungspunkts der Seile angreifenden (Wellen-) Lasten ergibt sich eine günstigere Mitwirkung der Massenträgheit der Windkraftgondel und der atmosphärischen Dämpfung des Rotors, die auch die Belastung der Spannseile reduziert, als bei geradliniger seitlicher Befestigung.

Die mit dem Nachgeben der Seile verbundene Iweichere" Reaktion der Tragstruktur im Vergleich zu unverbundenen Seilabspannungen, gekennzeichnet insbesondere durch eine größere Auslenkung der Gondel bei Krafteinwirkungen, kann dort und an anderer Stelle der Tragstruktur entstehene Lasten mindern.

Mit Seilen abgespannte Konstruktionen weisen regelmäßig eine Nichtlinearität dadurch auf, daß die Seile im Einfluß der Schwerkraft einen Durchhang aufweisen: Bei stärkerer Zugspannung nähert sich der Seilverlauf der Gerade, und der Kraftverlauf nähert sich damit einer Hookschen Geraden, die insbesondere durch die Materialeigenschaften des Seils bestimmt wird. Bei Nachgeben der Befestigungspunkte des Seils in Seilrichtung kommt es nicht zu abruptem Erschlaffen des Seils, vielmehr wird "überschüssige" Seillänge durch den Durchhang des Seils aufgenommen, mit sich allmählich reduzierender Seilspannung.

Darüber hinaus führt die erfindungsgemäß beschriebene Verbindung verschiedener Seile zu einer zusätzlichen Nichtliniearität. Diese käme bereits ohne einen Durchhang zustande, was etwa bei Ausgleich der Seilmasse durch Auftriebskörper der Fall wäre, bzw. bei Seilen oder Stäben mit idealen Eigenschaften gemäß dem Hookschen Gesetz. Insbesondere wird damit in vielen Fällen eine weitaus weichere und besser einstellbare nichtlineare Reaktion einstellbar sein, als durch den Seildurchhang.

Da sich bei dieser Art der Seilkonstruktion kein lineares System mit gleichbleibender Federkonstante ergibt, sind mögliche Schwingungen auch nicht auf feste Eigenfrequenzen beschränkt; gefährliche Schwingungsanregungen werden jedoch durch Nichtlinearitäten einer Tragstruktur eher beschränkt.

Daneben kommt es wie beschrieben zu besonderem Maße zu physikalischer Dämpfung durch die Bewegung der Abspannung in Wasser bzw. Luft, die durch dort evtl. befestigte Körper gezielt verstärkt werden kann.

### Weitere Ausprägungen

Durch eine Geometrie mit relativ geringer Knickung der Halteseileergibt sich eine schnellere Bewegung der Verbindungsseile und der Halteseile (idealtypisch quer zu deren Längsausdehnung).

Dieser Effekt kann durch eine mehrfache Beschleunigung durch mehrfachen seitlichen Angriff an leicht geknickten Seilen noch verstärkt werden.

Hierzu kann eine zusätzliche Verbindung mit weiter unten an der Tragstruktur verbundenen Seilen gemäß Anspruch 4 erfolgen. Dabei kann von den Halteseilen eine Verbindung zum unteren Teil der Tragstruktur mit Seilen erfolgen, die ihrerseits durch Verbindungsseile geknickt und verbunden werden, wobei die Verbindungsseile wiederum vorzugsweise als horizontal angeordnetes Dreieck verlaufen. Eine zunehmende Straffung der Halteseile führt dann zu einer ebenfalls zunehmenden Straffung der unten an der Tragstruktur befestigten Seile, und zwar bereits mit einer durch die Winkelverhältnisse an den Halteseilen bestimmten Verstärkung der Geschwindigkeit bzw. Amplitude. Durch die Knickung dieser Seile durch die Verbindungsseile zu den anderen Seiten kommt es zu einer weiteren Zunahme der Bewegung.

Umgekehrt ist es auch möglich, zunächst eine Verbindung zwischen den Halteseilen herzustellen, an der dann wiederum weitere Seile angreifen, die mit der Tragstruktur verbunden sind (Anspruch 5). Möglich sind auch komplexe Verbindungen mehrerer Seile bzw. Seilabschnitte.

Diese Bewegung kann zur Dämpfung der Turmbewegung im Wasser genutzt werden (Anspruch 3) und in die entsprechenden Standfestigkeitsnachweise eingehen (Anspruch 11). Dies kann durch zusätzliche Anbringung von Körpern unterstützt werden (Anspruch 8), die einen Strömungswiderstand erzeugen. Günstig erscheinen insbesondere "Rippen", bzw. flächige, kleinvolumige Körper, die im Verhältnis zu ihrem Volumen einen großen Strömungswiderstand aufweisen. Die Körper können auch so ausgeführt werden, daß sie sich in gewünschter Weise im Wasser drehen können, sich insbesondere unter äußeren Wellenlasten möglichst auf ihre Schmalseite drehen. Dabei kann die Tatsache genutzt werden, daß die vom Wind oder von den bewegten Rotoren ausgelöste Lasten meist eine höhere Frequenz aufweisen als die für die Bemessung der Wellenlasten maßgeblichen, langen Dünungswellen.

Während flächige Körper gemäß der Morisson-Gleichungen Bewegungen abbremsen, verursachen volumige Körper (Anspruch 7) im Wasser, auch bei gleicher Dichte wie das Wasser, Kräfte proportional zu ihrer Beschleunigung, und wirken damit, auch in der sonst "losen" Ausgangssituation, Beschleunigungen des Seilsystems und des Turms entgegen.

Die Konstruktion führt bei Biegung des Turms und Spannen der Halteseile auf einer Seite gleichzeitig zur Ausübung eines Zug auf die Verbindungsseile, der ein völliges Erschlaffen der entlasteten Halteseile und einen Ruck bei Wiederanspannung vermeidet.
Mit an den Verbindungsseilen befestigten Gewichten bzw. Auftriebskörpern gemäß Anspruch 6 kann eine Vorspannung der Verbindungsseile eingestellt werden, die auch bei etwaigem Nachgeben der Pfahl-Verankerungen der Halteseile weitgehend aufrechterhalten bleibt, und zudem leicht nachträglich ergänzt werden kann.

Durch seitliches Halten der Tragkonstruktion gemäß Anspruch 9 während der Bauzeit kann evtl. auf den Einsatz von weiteren Hubeinrichtungen reduziert werden. In vorteilhafter Ausprägung könnte die Tragkonstruktion mit zusätzlicher Hilfe von Auftrieb schaffenden Einrichtungen aufgerichtet werden, von den Seilen gehalten werden, und eine Rammeinrichtung könnte von dem Turm der Tragkonstruktion selbst gehalten werden.

Vorteilhaft ist beim Aufprall eines Schiffs gegen eines der Halteseile, daß auch die entgegengesetzten Halteseile gespannt werden; dies kann das Risiko vermindern, daß der Turms durch das angefahrene Halteseil zu dem Schiff hin gezogen wird und auf das Schiff fällt. Kommte es dabei zum Reißen eines dem Schiff entgegengesetzten Halteseils, wird auch das Halteseil auf Seite des Schiffes im Bereich der Befestigung des Verbindungsseils entspannt; dadurch kann es evtl. zu einem Umfallen des Turms in Richtung des gerissenen Seils und vom Schiff weg kommen.

### VI. Ausführungsbeispiel und Zeichnung

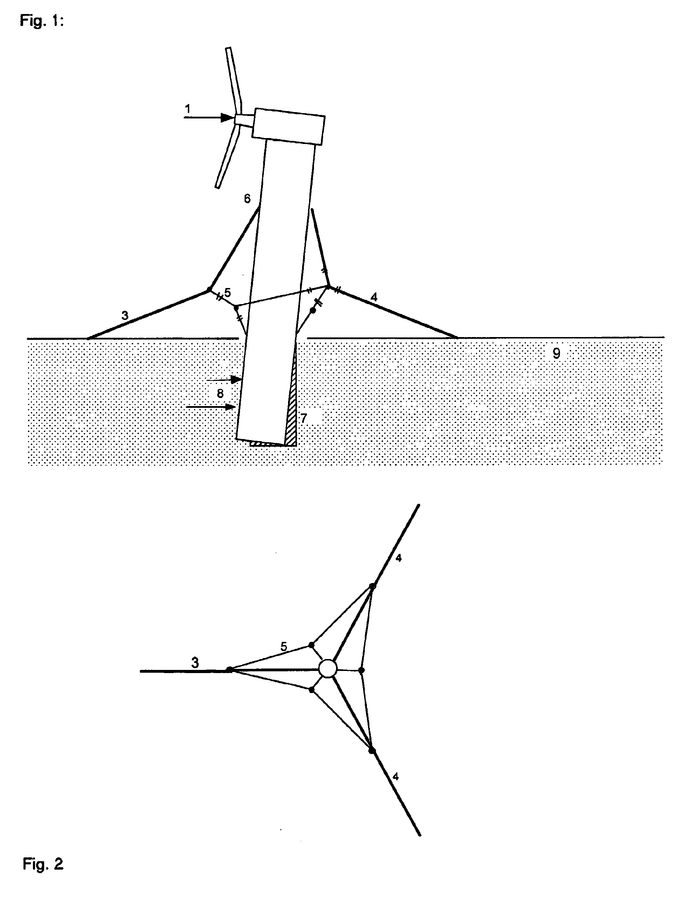

In der Figur 1 dargestellt wird eine Tragstruktur mit einem großen zylinderförmigen Rohr als Fundament (unbelastete Position = 7) unterhalb des Meeresbodens (9) und einem Turm mit einer Windkraftanlage.

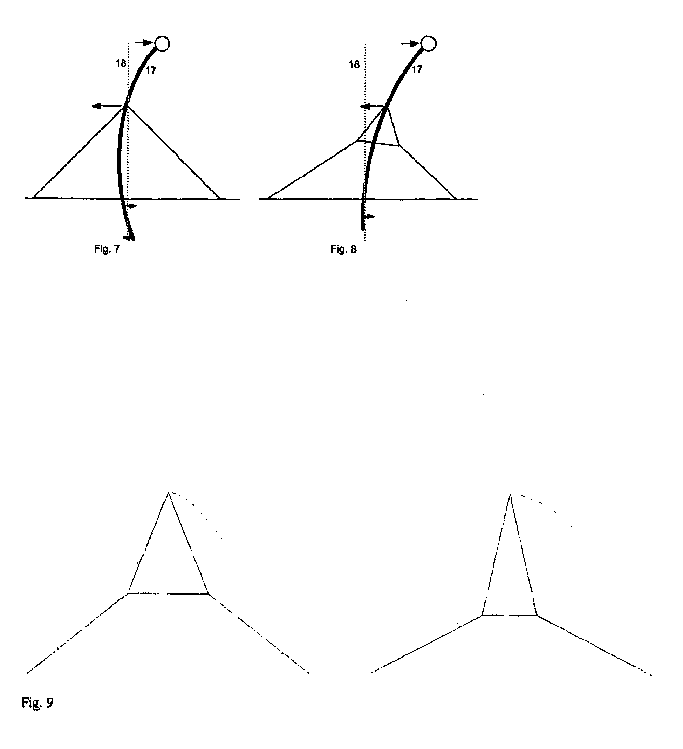

Die oben an der Windkraftanlage angreifenden äußeren Kräfte (1) drücken die Tragstruktur im oberen Teil nach rechts und spannen das linke äußere Halteseil (3). Dadurch werden die Verbindungsseile (5) nach links gezogen, was durch das Nachgeben der rechten Halteseile (4) begünstigt wird. Eine ungünstige Schrägstellung des Fundament wie bei der Verbiegung eines Turms gemäß Abbildung 7 wird damit vermieden.

Je nach Geometrie der Seile kann erreicht werden, daß sich die Verbindungsseile schneller bewegen als die Tragstruktur im Befestigungspunkt (6). Damit kann eine Dämpfung im Wasser von Bewegungen der Tragstruktur erreicht und gesteuert werden. Ein Strömungswiderstand entsteht vorrangig bei Bewegungen senkrecht zur Seilachse. Die Befestigung von einen Strömungswiderstand bildenden Körpern an den Seilen kann vor allem bei Seilen, die ungefähr parallel zu ihrer Seilachse bewegt werden, den Strömungswiderstand erhöhen.

Durch die angreifenden Kräfte wird das Fundament gegenüber der ursprünglichen Lage nach links gegen den Boden gedrückt, wodurch eine Gegenkraft durch das Bettungsmodul des Bodens entsteht. Eine große Steifheit des Turms kann teilweise durch die flexible Aufhängung ausgeglichen werden. Im Beispiel ist der Nulldurchgang der seitlichen Auslenkung des steif dargestellten Turms gerade in Meereshöhe.

Die Figur 1 stellt ein Seilsystem gemäß Anspruch 5 dar, bei dem von den Verbindungsseilen eine weitere Verbindung zum Fuß der Tragkonstruktion ausgeführt wurde. Wo sich zwei Seile oder Tragstreben in der Zeichenebene hintereinander befinden, ist dies durch zwei kurze Striche dargestellt. Auf der rechten Seite ist eine zumTurmfuß verlaufende Linie dargestellt, die im oberen Teil zwei Verbindungsseile zwischen zwei Halteseilen 4 repräsentiert, an der ab einem Verbindungspunkt ein Seil zumTumfuß angreift.

Im Grundriß (Figur 2) sind ebenfalls die Verbindungen zwischen Seilen als runde Fläche hervorgehoben.

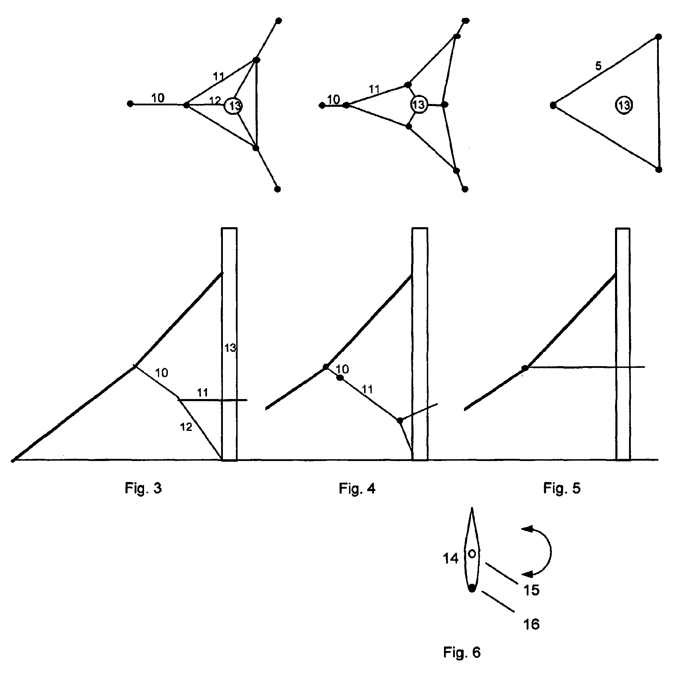

Figur 3 zeigt oben im Grundriß, unten in der Seitenansicht die Verbindungsseile einer Variante zu Anspruch 4, bei der an jedem Halteseil (Halteseile nicht dargestellt) nur ein Verbindungsseil (10) unten angreift; diese drei Verbindungsseile sind untereinander mit drei weiteren Verbindungsseilen (11) verbunden, die ein horizontal liegendes Dreieck bilden. An der Verbindungsstelle zu dem Dreieck greift ein weiteres Seil (12), das mit dem Turm (13, hier als Rohrturm dargestellt) verbunden ist, an. Der innere Teil der Halteseile befindet sich in Ruheposition genau oberhalb der Verbindungsseile.

Figur 4 zeigt eine Variante der Verbindungsseile gemäß Anspruch 5, bei der die Verbindungen zum Turm nicht an den Ecken des Dreiecks angeschlossen sind, sondern in der Mitte der entsprechenden Seile (11), so daß sich an Stelle eines Dreiecks eine sternförmige Figur mit sechs Abschnitten ergibt. Im Vergleich zu den Anordnung in Figur 1 sind hier noch weitere Verbindungsstücke (10) zu den Halteseilen (nicht dargestellt) vorhanden.

Figur 5 zeigt drei Verbindungsseilen (5) zwischen drei Halteseilen (nicht dargestellt) als der einfachsten Ausprägung der Erfindung.

Figur 6 zeigt einen möglichen Strömungskörper (14), wie er z.B. in den Pfeilrichtungen drehbar um ein Seil (15) befestigt werden könnte, der durch ein exzentrisches Gewicht (16) normalerweise senkrecht steht, sich bei länger anhaltenden Wasserbewegungen aber aus der Strömung drehen kann.

Figur 7 stellt eine ungünstige Wirkung eines steif mit Seilen eingebundenen, biegsamen Turms (17) und der dadurch vom Boden auf den Pfahl ausgeübten Kräfte (Pfeile) dar. Der untere Teil des Turms steht gegen Windrichtung (oberster Kraftpfeil) schräg, dadurch entsteht im Fundament ein zusätzliches Kippmoment nach rechts. Die unteren Pfeile kennzeichnen die vom Boden auf den Pfahl ausgeübten Kräfte. Die gestrichelte Linie (18) bezeichnet die Ruheposition des Turmes.

Figur 8 zeigt eine günstigere Situation mit einer Seilführung wie in Figur 5: Der Turm neigt sich im Bereich der Seilabspannung weiter zur Seite, wird dann aber durch die progressiv zunehmende Differenz der seitlichen Seilkräfte gehalten. Vor allem in Verbindung mit einem Monopfahlfundament kann bei geeigneter Dimensionierung erreicht werden, daß sich eine seitliche Bettung des Pfahls in nur einer Richtung einstellt, während das Seilsystem Kräfte in die andere Richtung auf den Pfahl ausübt. Damit wird ein Nulldurchgang der seitlichen Bettung im Monopfahl vermieden, der grundsätzlich den Nachteil hätte, daß in diesem Bereich keine Bettungskräfte an den Boden übertragen werden.

Der Effekt der Nachgiebigkeit von untereinander verbundenen Halteseilen kann anschaulich dargestellt werden, wenn man wie in Figur 9 die Bewegungsmöglichkeiten eines außen am Boden befestigten Seil- bzw. Stabsystems, dessen Elemente zunächst nicht gedehnt werden, bei unterschiedlich langen Verbindungsseilen betrachtet. Am Scheitelpunkt ergibt sich eine horizontale Bewegung des oberen Verbindung der Seile, die dann in eine bogenfömige Abwärtsbewegung übergeht. Wird nun, von der Ausganglage ausgehend, die Höhe des Verbindungspunktes durch die Verbindung mit einem vertikalen Element (dem zentralen Turm) konstant gehalten, ist anfangs eine freie Bewegung möglich, die dann aber in zunehmendem Maße eine Dehnung der Seile erfordert.

## Patentansprüche

1. Tragkonstruktion für meerestechnische Installationen, zu denen im vorstehenden Sinne gehören alle Arten von Bauwerken und Installationen im Wasser, auch in Binnenseen, mit einem zentralen Turm (13), der unten mit einem im Boden verankerten Fundament (7) so verbunden ist, daß eine Kraft- und Momentübertragung zwischen dem Teil des Turmes oberhalb des Bodens und dem Fundament möglich ist,
mit im Bereich des Turms seitlich angreifenden, von dort schräg nach unten verlaufenden Halteseilen (3, 4, 6)
**gekennzeichnet dadurch, daß**
diese Halteseile untereinander durch weitere Verbindungsseile (5) direkt bzw. indirekt verbunden sind,
und dadurch eine geknickten Verlauf aufweisen,
wobei die Bewegung des Turms in eine Richtung eine Zunahme der Einknickung des an dieser Seite angreifenden Halteseils bewirkt,
die zu einem Nachgeben der Verbindungsseile führt,
was wiederum ein Nachgeben des gegenüberliegenden Halteseils bzw. der anderen Halteseile ermöglicht,
so daß die Seile dem Turm bei dessen zunehmender Schrägstellung bzw. zunehmender seitlicher Verschiebung der Ansatzstelle der Seile in statischer Betrachtung
zunächst geringere aufrecht haltende Kräfte entgegensetzen,
als es bei geradliniger Führung der Halteseile der Fall gewesen wäre;

2. Tragkonstruktion gemäß Anspruch 1
bei der
das Prinzip, daß sich bei Bewegung eines Endpunkts von zwei miteinander an den Enden verbundenen Stäben bzw. Seilen oder Seilabschnitten, deren Achsen im stumpfen Winkel zueinander stehen, der Verbindungspunkt schneller bewegt als der Endpunkt, dadurch genutzt wird, daß die Seile so angeordnet werden, daß sich die Verbindungsseile (5) bzw. die Hauptseile (3, 4, 6) oder Teile davon schneller im Wasser bewegen, als der Turm in gleicher Höhe,
sich dadurch ein größerer Strömungswiderstand an den Seilen oder damit verbundenen Körpern aufbaut, als es ohne die vorstehende Geschwindigkeitsüberhöhung möglich wäre.

3. Tragkonstruktion nach einem der Ansprüche 1 bis 2,
**dadurch gekennzeichnet, dass** von den zwischen Turm und Meeresboden verlaufenden Halteseilen weitere Seile (12) zu einem tiefer gelegenen Punkt des Turms bzw. dem oberen Teil des Fundaments führen, die ihrerseits durch Verbindungsseil (11) verbunden sind.

4. Tragkonstruktion nach einem der Ansprüche 1 bis 2,
**dadurch gekennzeichnet, daß** an den die Halteseile verbindenen Verbindungsseilen (10) weitere Seile (11, 12) angreifen, die zu mindestens einer tiefer gelegenen Stelle am Turm bzw. dem oberen Teil des Fundaments führen.

5. Tragkonstruktionen gemäß einem der Ansprüche 1 bis 4,
bei dem an mindestens einem der Seile ein Gewicht (16) bzw. ein Auftriebskörper befestigt ist.

6. Tragkonstruktionen gemäß einem der Ansprüche 1 bis 5,
bei dem an mindestens einem der Seile ein Volumenkörper befestigt ist.

7. Tragkonstruktion gemäß einem der Ansprüche 1 bis 6,
bei dem an mindestens einem der Seile ein einen Bewegungswiderstand verursachender Gegenstand befestigt ist.

8. Tragkonstruktion gemäß einem der Ansprüche 1 bis 7,
bei der an Stelle von Seilen Stäbe bzw. andere bewegliche, auf Zug belastbare Tragelemente verwendet werden, vorzugsweise mit gelenkigen Verbindungen an den Verbindungsstellen zwischen mehreren Tragelementen bzw. bei der Seile in mehrere Seilabschnitte unterteilt sind.

9. Verfahren zur Errichtung einer Tragkonstruktion gemäß einem der Ansprüche 1 bis 7
bei der die Halteseile vor Aufrichten des Turms im Boden verankert werden, und den Vorgang des Aufrichtens bzw. Verankerns im Boden unterstützen.

10. Verwendung der Tragkonstruktion gemäß Anspruch 1
für offshore-Windkraftanlagen; offshore-Windkraftanlagen im vorstehenden Sinne sind alle Anlagen und Bauwerke mit rotierenden Bestandteilen, die bei Mittelwasserstand im Wasser stehen und die Luftbewegung zur Gewinnung von Sekundärenergie nutzen, auch wenn sie zusätzliche Einrichtungen aufweisen.

## Claims

1. Support construction for technical sea-based installations,
which include all types of water-based structures and installations, including those in lakes,
with a central tower 13, which is connected to the foundation 7 anchored in the ground such that forces and moments can be transferred between the part of the tower above the ground and the foundation
with support guys 3, 4, 6 attached to the sides of the tower and running down from there at an angle
**characterised by** the fact that
these guys are connected to one another directly or indirectly by further connecting cables 5
which means that they do not run straight to the ground,
whereby the motion of the tower in one direction increases the kinking of the guys that hold it at the side in question,
which leads to a relaxing of the connecting cables,
which in turn facilitates relaxation of the guy holding the opposite side or the other guys
so that the cables statically subject the tower to lower supporting forces, as it starts to lean over, or as the holding point of the cables starts to move to the side, than would have been the case if the guys were running straight to the ground.

2. Support construction in accordance with claim 1,
in which the principle that if an end point of two rods or cables or cable parts joined together at the ends, whose axes are at an obtuse angle to one another, moves, the connection point moves faster than the end point, is used in such a manner that
the cables are arranged such that the connecting cables 5 or the main cables 3, 4, 6 or parts thereof move faster in the water than the tower at the same height,
resulting in greater flow resistance on the cables or connected solids than would have been possible without the above mentioned higher speed.

3. Support construction in accordance with one of claims 1 to 2,
**characterised by** the fact that additional cables 12 run from the guys which connect the tower and the sea bed to a lower point on the tower or the upper section of the foundation, which in turn are connected by connecting cables 11.

4. Support construction in accordance with one of claims 1 to 2,
**characterised by** the fact that additional cables 11, 12 are attached to the cables connecting the guys 10 which run to at least one lower point on the tower or the upper section of the foundation.

5. Support constructions in accordance with one of claims 1 to 4,
in which a weight 16 or a float is attached to at least one of the cables.

6. Support constructions in accordance with one of claims 1 to 5,
in which a solid is attached to at least one of the cables.

7. Support construction in accordance with one of claims 1 to 6,
in which an object causing kinetic resistance is attached to at least one of the cables.

8. Support construction in accordance with one of claims 1 to 8,
in which rods or other mobile support elements resistant to tensile load are used instead of cables, preferably with jointed connections at the connection points between several support elements or points in which the cables are divided into several cable sections.

9. Processes for building a support construction in accordance with one of claims 1 to 8,
in which the guys are anchored in the ground before the tower is erected, and support the process of erecting or anchoring in the ground.

10. Use of the support construction in accordance with claim 1
for offshore wind turbines; offshore wind turbines as described above include all systems and buildings with rotating components, which stand in the water at an average water level and use air motion to generate secondary energy, even if they are equipped with additional devices.

## Revendications

1. Ossature pour installations techniques en mer,
à savoir tout type de constructions et d'installations dans l'eau, y compris dans les mers intérieures,
avec une tour centrale 13, qui est assemblée en bas à une fondation 7 ancrée dans le fond de la mer de manière à ce qu'une transmission des forces et des moments soit possible entre la partie de la tour située au dessus du sol et la fondation,
avec, au niveau de la tour, des haubans 3, 4, 6 appliqués latéralement et descendant de là de manière inclinée vers le bas,
**caractérisée en ce que**
lesdits haubans sont reliés entre eux directement ou indirectement par d'autres câbles de liaison 5,
marquant par conséquent un flambement,
le mouvement de la tour dans un sens ayant pour effet l'augmentation du flambement du hauban appliqué de ce côté,
laquelle augmentation entraîne le fléchissement des câbles de liaison,
ce qui par répercussion permet le fléchissement du hauban situé en face ou des autres haubans,
de sorte que les haubans n'opposent à la tour, dans un premier temps, au fur et à mesure de son inclinaison ou au fur et à mesure du déplacement latéral du point d'applique des haubans en observation statique que des forces de retenue plus faibles que ce ne serait le cas s'ils avaient une trajectoire rectiligne.

2. Ossature selon la revendication 1,
à laquelle l'application du principe selon lequel, lors du mouvement d'un point d'extrémité de deux barres ou câbles ou tronçons de câble reliés entre eux par leurs extrémités et dont les axes sont réciproquement relatifs à angle obtus, le point de liaison bouge plus vite que le point d'extrémité, est **caractérisée en ce**
**que** les câbles sont disposés de manière à ce que les câbles de liaison 5 ou les haubans 3, 4, 6 ou des parties de câbles bougent plus vite dans l'eau que la tour à même hauteur,
et **que**, par conséquent, la traînée qui s'établit sur les câbles ou sur les corps avec lesquels ils sont reliés est plus forte qu'elle ne le serait sans l'augmentation de vitesse décrite précédemment.

3. Ossature selon l'une des revendications 1 ou 2,
**caractérisée en ce que** à partir des haubans placés entre la tour et le fond de la mer, d'autres câbles 12 mènent en un point de la tour situé plus bas ou à la partie supérieure de la fondation et sont eux-mêmes reliés par des câbles de liaison 11.

4. Ossature selon l'une des revendications 1 ou 2,
**caractérisée en ce que** d'autres câbles **11, 12** sont appliqués aux câbles de liaison **10** reliant les haubans qui mènent en au moins un point situé plus bas sur la tour ou sur la partie supérieure de la fondation.

5. Ossature selon l'une des revendications 1 à 4,
sur laquelle un poids 16 ou un flotteur est attaché sur au moins un des câbles.

6. Ossature selon l'une des revendications 1 à 5,
sur laquelle un corps volumétrique est attaché à au moins un des câbles.

7. Ossature selon l'une des revendications 1 à 6,
sur laquelle un objet causant une impédance cinétique est attaché à au moins un des câbles.

8. Ossature selon l'une des revendications 1 à 8,
dans laquelle sont employés, au lieu de câbles, des barres ou autres éléments porteurs mobiles supportant des contraintes de traction, de préférence avec des liaisons articulées aux points de jonction entre plusieurs éléments ou dans laquelle les câbles sont divisés en plusieurs tronçons.

9. Procédé pour ériger une ossature selon une des revendications 1 à 8,
dont les haubans sont ancrés dans le fond de la mer avant l'érection de la tour et contribuent à la manoeuvre d'érection ou d'ancrage dans le sol.

10. Utilisation de l'ossature selon la revendication 1
pour des éoliennes offshore ; les éoliennes offshore, au sens où elles sont entendues ici, sont toutes les installations et constructions à composantes rotatives qui, dans l'eau par niveau de moyennes eaux, exploitent la circulation de l'air pour gagner de l'énergie secondaire, même si elles disposent de dispositifs supplémentaires.
